# EUROPEAN PATENT SPECIFICATION

(11) **EP 2 181 880 B1**
(45) Date of publication and mention of the grant of the patent: **04.01.2012**
(21) Application number: 08168263.5
(22) Date of filing: 04.11.2008
(51) Int. Cl.: B60K 35/00, B60R 1/00, B60Q 1/52, G07C 5/08

(54) **Electronic arrangement for controlling a signal from an instrument**
Elektronische Anordnung zum Steuern eines Signals aus einem Instrument
Agencement électronique pour le contrôle d'un signal à partir d'un instrument

(43) Date of publication of application: 05.05.2010
(73) Proprietor: Volvo Car Corporation, 405 31 Göteborg (SE)
(72) Inventor: Davidsson, Staffan, 42668 Västra Frölunda (SE); Lindgren, Thomas, 31058 Vessigebro (SE)
(74) Representative: VALEA AB

(56) References cited:
- EP-A- 1 080 976
- EP-A- 1 298 001
- DE-A1-102006 036 241
- US-A1- 2007 009 137

## Description

### TECHNICAL FIELD

The present invention relates to an electronic arrangement for a vehicle for controlling signals in an electronic display arrangement. The electronic arrangement is arranged to selectively switch between a plurality of different operational settings which in turn are each associated with different identification signals.

### BACKGROUND OF THE INVENTION

Information and display systems intended to aid a driver of a vehicle is steadily improving. As the amount of available information is increasing the need for methods and arrangements which can selectively pick the correct kind of information and display that information to the driver is further required. In the patent publication of US 5764139 an information display apparatus for vehicles which comprises detection means for detecting the running condition, memory means for storing information to display corresponding to respective running conditions and different degrees of importance of information, display means for displaying information, and control means for reading display information is disclosed. The information display apparatus changes the information displayed on the screen according to the running conditions. The apparatus is said to enable the driver to easily see and understand the displayed information. The just mentioned apparatus is however not putting the information in context with the vehicle.

In the patent publication of US 6947064 a process and a device for displaying traffic information is disclosed. The process includes displaying a perspective display with an image element for at least one occupant of a vehicle, wherein the display represents the perspective or view of the occupant, in which the image element is changed in at least one characteristic depending on the forward travel way (roadway), one operational parameter of the motor vehicle, and/or at least one parameter of an object identified in the environment of the travel way. This is mainly enabled by projecting the image in an elevated view which would correspond to the view of the occupant. However, also this process and device does not put the information in context with the vehicle. Another example of such a system is disclosed in the publication of US 7151997.

US 7102496 discloses an apparatus for integrating external sensors with a vehicle's internal sensors and thereafter assessing any potential threats. However, the apparatus does not put the information in context with the vehicle. Moreover, each of the above mentioned solutions has the drawback of risking information losses in the system since the information is processed independently of its context with respect to the vehicle.

An apparatus showing the features of the preamble of claim 1 is known from EP 1 298 001 A2.

### SUMMARY OF THE INVENTION

The above mentioned problems are at least partly solved by an electronic arrangement for a vehicle for controlling signals in an electronic display arrangement. The electronic arrangement, according to the present invention, is arranged to selectively switch between a plurality of different operational settings. The arrangement comprises a display unit on which each of the operational settings can be visually displayed. The arrangement further comprises a signal gateway through which at least one signal from at least one instrument is selectively provided access through to the display unit depending on the selected operational setting. Each operational setting is associated with an identification signal representative of a predetermined displayed size, part or view of the vehicle on the display unit. The arrangement is further arranged to receive the at least one input signal from the at least one instrument. The at least one instrument is at least one information receiving instrument and/or at least one vehicle information collecting instrument. The electronic arrangement is adapted to substantially simultaneously provide access for the identification signal and the at least one input signal through the signal gateway to the displaying unit. As used herein, the term substantially simultaneously means simultaneously or in close succession.

It should be noted that a vehicle or vehicle part of a particular size, or shown from a particular angle may be represented by any shape, such as a rectangle, and need not necessarily resemble a vehicle.

The present invention provides for an electronic arrangement which automatically selects an operational setting which filters incoming signals from a plurality of instruments and associates each signal with an identification signal representative of a predetermined size, part or view of the vehicle. The predetermined size, part or view of the vehicle can be a unique size, part or view of the vehicle. This enables a driver to receive information about the plurality of instruments in a very selective manner while at the same time not overloading the vehicle's own systems with signals from instruments which are not relevant for the present situation.

In an embodiment according to the present invention, the operational setting is automatically selected, for example, the operational setting may be selected at least on the basis of the vehicle speed, although others criteria may be used for selection such as local terrain, the weather, etc. For instance, if the vehicle is standing still, signals from radar instruments, collecting information about the imminent surroundings, may be considered less important and as such they can be filtered out. Alternatively or additionally on the basis of the pre-programmed driver preferences or driver preferences inserted by an occupant of the vehicle.

In an embodiment according to the present invention, the at least one instrument is a plurality of instruments each of which is permitted access through the signal gateway on the basis of its operational distance, i.e. the volume/area, distance range within which data is collected, calculated or displayed. For instance, long operational distance can be 1-20 km as measured from the centre of the vehicle, a medium operational distance can be 2-1000 m, and short operational distance can be up to 2 m and an internal operational distance can be defined as inside the vehicle itself.

The electronic arrangement can be adapted in accordance with the vehicle occupant's preference. For instance, the occupant can select which instruments he/she permit access through the signal gateway. The operational setting or instruments within an operational setting are selected automatically on basis of vehicle occupant preferences.

In an embodiment according to the present invention, at least a first, second, third and fourth operational setting is selectable, preferably also a fifth operational setting. For each selected operational setting a unique combination of instruments are permitted access through the signal gateway. As such, the driver is provided with relevant information which puts the information in context with the vehicle, i.e. which shows from which part(s) of the vehicle or area or volume around the vehicle data is being collected, calculated or displayed.

The plurality of operational settings preferably includes a first operational setting during which the signal gateway permits access to a first block of instruments, the first block of instruments comprises at least one information receiving instrument. This setting combines signals from the first block of instruments with an identification signal representative of a predetermined displayed size, part or view of the vehicle. Preferably such displayed vehicle size is relatively small with respect to the size of the display means of the display unit. The plurality of operational settings preferably includes a second operational setting wherein the signal gateway permits access to at least a second block of instruments, the second block of instruments comprises at least one information receiving instrument and at least one vehicle information collecting instrument. This setting combines signals from the second block of instruments with an identification signal representative of a predetermined displayed size, part or view of the vehicle, different from that of the first operational setting. The size of the displayed vehicle is preferably somewhat larger than that of the first operational setting.

A third operational setting can preferably selected, during which the signal gateway permits access to at least a third block of instruments, comprising at least one vehicle information collecting instrument. This setting combines signals from the third block of instruments with an identification signal representative of a predetermined displayed size, part or view of the vehicle, optionally different from that of the first and/or second operational setting. The size of the displayed vehicle is preferably somewhat larger than that of the first and second operational setting, for example.

The plurality of operational settings preferably further includes a fourth operational setting during which the signal gateway permits access to at least one vehicle status instrument. This setting combines signals from the fourth block of instruments with an identification signal representative of a predetermined and/or unique displayed size, part or view of the vehicle, different from that of the first, second and third operational setting. The size of the displayed vehicle is preferably somewhat larger than that of the first, second and third operational setting, for example. Furthermore a fifth operational setting can be optionally provided wherein the signal gateway permits access to at least one vehicle information log instrument. This setting can combine signals from at least one log instrument with an identification signal representative of a predetermined displayed size, part or view of the vehicle, optionally different from that of the first, second, third and forth operational setting, for example.

It should be noted that the same instruments can be found in different blocks of instruments. It is preferable however that signals from those instruments are selected, i.e. permitted or prevented access through the signal gateway, on the basis of the information carried by the signal.

Furthermore can the display unit indicate which instruments that are permitted access through the signal gateway. A vehicle occupant may further select directly on the display unit which signals that are permitted or prevented access through the signal gateway. As such, the display unit can be provided with means to activate/de-activate instrument/data sources.

### BRIEF DESCRIPTION OF THE DRAWINGS

The present invention will de described in greater detail with reference to the accompanying figure in which;

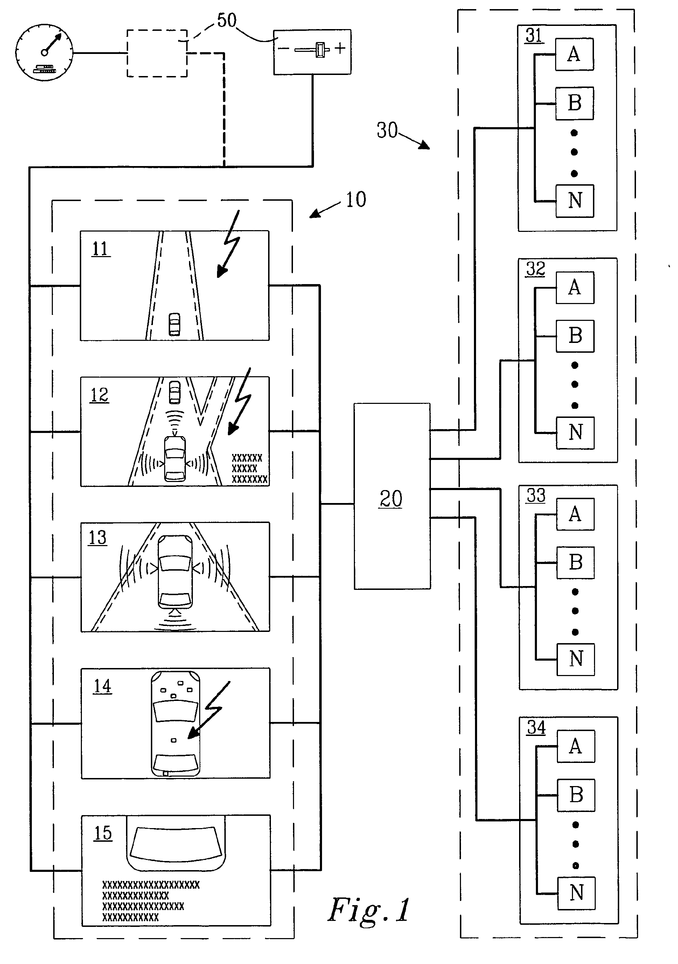

figure 1 shows a schematic view of an electronic arrangement, according to one embodiment of the present invention, with its different components and its signal routes.

### DETAILED DESCRIPTION OF PREFERRED EMBODIMENTS

Figure 1 shows a schematic view of a flow chart by which the method for controlling signals in a vehicle electronic display arrangement according to the present invention will be further described by means of referring to a vehicle electronic display arrangement according to the present invention. The vehicle electronic display arrangement is arranged in an automotive vehicle, such as a passenger car, buss, heavy goods vehicle, train or the like. Figure 1 show more specifically a display unit 10 on which different operational settings can be visually displayed. In this embodiment, according to the present invention, five different operational settings are displayed selectively on the display unit 10. Although for the sake of clarity, each operational setting has been illustrated simultaneously in figure 1. It should be noted that each operational setting is preferably displayed one by one on the same screen, i.e. the display means of the display unit. A plurality of operational settings may however be displayed simultaneously on a screen of a display unit. The displaying unit 10 is illustrated with, in order from above, a first operational setting 11 referred to as the strategic view, a second operational setting 12, referred to as the tactical view, a third operational setting 13, referred to as the operational view, a fourth operational setting 14, referred to as the vehicle status view, and a fifth operational setting 15, referred to as the log register view. Each of these views will be described in greater detail below. Each operational setting can be manually or automatically selected by a switch 50.

A signal gateway 20 communicates with the display unit 10, the signal gateway 20 is arranged to selectively provide access or restrict access to the displaying unit 10, thereby controlling the incoming signals to the displaying unit and thereby the information displayed on the displaying unit 10 dependent on which operational setting(s) that has/have been selected.

Communicating with the signal gateway 20 is a plurality of instruments 30. The instruments 30 are separated into four different groups 31, 32, 33, 34 each representative of the instrument's 30 operational distance with respect to a reference point. By operational distance is meant the practical distance in which the instrument operates within. In this case the operational distance is given in meters and with respect to the vehicle's geometric centre. For instance, it can be the distance from the automotive vehicle's centre point from which the instrument collects its data.

Furthermore an identification signal 50 is operable with the signal gateway 20. The identification signal 50 is representative of a unique displayed size of said vehicle on said displaying unit. Furthermore, each of the operational settings 11, 12, 13, 14, 15 are provided with unique identification signal 50, in the illustrated embodiment, which is representative of a unique displayed size of said vehicle on said displaying unit. Hence for each operational setting 11, 12, 13, 14, 15 a unique vehicle size is associated and displayed. It should however be noted that vehicles of the same size may be displayed in two or more operational settings 11, 12, 13, 14, 15.

The first operational setting 11 and the strategic view are specifically set to provide information relevant to the selected goal and any obstacles which might be relevant when travelling towards the goal. For instance, such information can be;
that an accident has occurred 8 km ahead;
that a hotel is located at a distance of 7 km ahead and that exit 60 should be taken to get there;
and/or that a fuel station is located 5 km along route 66 and exit 59 should be taken to get there.

The first block 31 is representative for instruments 30, hereafter denoted A, B....up to N numbers of instruments, having an operational distance of about 1-20 km, although there is no need the upper boundary of 20 km. Examples of instruments 30 from the first block 31 are; traffic message command (TMC); points of interest (POI info), or the like. The identification signal 50, which is associated with the strategic view, i.e. the first operational setting 11, is unique for a specific displayed vehicle size. It should be noted that a particular instrument can be included in a plurality of groups 31, 32, 33, 34. In the strategic view the displayed vehicle size in about a fifth of the length of the screen of the display unit. As such, a driver can easily be informed about the automotive vehicle's position and the relevant data which is required on a strategic level to reach the goal in the best and most appropriate way. This kind of information is usually navigational data. As is noted, the strategic view does not contain any information about the vehicle's status; instead signals concerning the vehicle's status are effectively blocked by the signal gateway 20 until the correct vehicle status operational setting is selected. As is illustrated by the arrow shown penetrating the first operational setting 11, if the first operational setting 11 is chosen, the signal gateway only permits information from the outside of the vehicle through to the displaying unit 10, i.e. from data receiving instruments.

The second operational setting 12, the tactical view, is specifically set to provide information relevant for the upcoming traffic just ahead, possible obstacles in the proximity which might affect the driving of the vehicle or the like. The second block 31 is representative for instruments 30 having an operational distance of about 2-1000 m. Examples of instruments 30 from the second block 32 are; blind spot information system (BLIS); driver alert (DA); adaptive cruise control (ACC); lane departure warning (LDW); lane keeping aid (LKA); driver alert systems; curve overspeed warning; green drive aid; upcoming school areas; road crossings; traffic lights and speed cameras. As is noted, the second operational setting 12, i.e. displayed as the tactical view, combines input from navigational instruments as well as the vehicle own instruments by selectively operating the signal gateway 20. More precisely, the tactical view combines data received form outside of the automotive vehicle from e.g. a satellite; with data collected by the automotive vehicles own system, such as input from an adoptive cruise control. This is illustrated in figure 1 with the arrow penetrating the second operational setting 12, and the crest formed beams exiting from the vehicle. The received and collected data can thereafter be displayed on the displaying unit 10. In this case the instruments in the second and third groups 32, 33 are permitted access though the signal gateway 20. However, as an option, signals from the first block 31 can also be permitted access. This is just one of the advantages of the present invention, to readily combine information received from outside the vehicle with information gathered from the automotive vehicle's own detection systems, while at the same time permitting access to that information through the signal gateway 20 only when the appropriate operational setting is chosen, manually or automatically. This will permit a driver to acknowledge the information and to perceive the information in an easy manner.

The third operational setting 13, the operational view, is specifically set to provide information about the imminent surroundings of the automotive vehicle, usually within a radius of about 2 meters around the automotive vehicle but without permitting access to information received by "outside of the vehicle" systems. In principle, the driver should be able to drive the automotive vehicle, e.g. slowly park the automotive vehicle by only viewing the display unit. Hence, when the third operational setting 13 is selected, the instruments 30 having the relevant operational distance, in this case only the instruments A, B... N of the third block 33, are provided access through the signal gateway 20. Preferable instruments 30 of the third block 33 are; park assistance sensors; cameras, automatic parking aid, approaching person detection systems or the like.

The fourth operational setting 14, the vehicle status view, is specifically set to provide about the status of the vehicle. As such the instruments 30 which communicate with the displaying unit 10 are only instruments which detect, sense or determine parameters within the automotive vehicle itself. The operational distance of the instruments 30 of the fourth block 34 is therefore confined to the automotive vehicle itself. Preferable instruments 30 of the fourth block 34 are; Tire pressure, HEV energy flow, belt reminder, door sensors generally detecting whether a door is closed or open. Hence, the signal gateway 20 denies access for all signals which are not sensing or detecting parameters inside the vehicle itself. It should be noted that the electronic arrangement may be arranged to automatically display urgent information, such as messages informing vehicle occupants to fasten their seat belts by allowing particular operational setting signal access to a display means.

The fifth operational setting 15, the log register view, is specifically set to provide trip history, feedback and past time maneuvers and their impact on e.g. the environment. In this operational setting, the signal gateway 20 only provides access to the displaying unit 10 for instruments 30 which records parameters, such as a log register database, e.g. on a hard drive.

According to the present invention, the method for controlling signals in a vehicle electronic display arrangement comprises a step in which the operational settings are automatically selected by the outcome of an algorithm which determines and evaluates a number of selected parameters. Furthermore the vehicle electronic display arrangement, according to the present invention is arranged to run and to respond to such an algorithm. Dependent on the outcome of the selected parameters, the signal gateway 20 provides or prevents access for the signals from the instruments 30 and a predetermined, or optionally an unique, identification signal 50 (unique for each operational setting). By way of example only, one such selected parameter can be the current traffic situation as defined by information available via GPS and/or a traffic information system. An example of possible traffic situations are; a parking situation, e.g. on a parking lot; when driving in a city; driving on a country road; driving on a highway; when queuing; during an emergency break, e.g. during a high work load; or the like. These traffic situations can be combined with the current speed of the automotive vehicle. Optionally the speed of the automotive vehicle can be used by itself, although it is believed that a more accurate switching between the operational settings can be achieved when considering additional parameters. This has been illustrated in figure 1 with the dotted lines leading to the speedometer. As such, each operational setting can be initiated by the system related event, e.g. a sudden increase in oil pressure would initiate the fourth operational setting, so that only readings from instruments of the fourth block 34 would be displayed. The oil pressure sensor would be a typical instrument found in the fourth block 34. It is also possible to adapt the identification signal 50 to be continuously increased or continuously decreased, as such, the displayed vehicle would continuously increase or decrease in e.g. size. In this case the instruments of the first, second, third and fourth bock 31, 32, 33, 34 are selectively permitted access through the signal gateway 20 dependent on a threshold value, or an interval, of at least one selected parameter, such as the vehicle speed.

The signal gateway can in itself comprise a number of different switches which are operable to permit or restrict access of the instruments 30 found in each different block 31, 32, 33, 34.

## Claims

1. An electronic arrangement for a vehicle for controlling signals in an electronic display arrangement, said electronic arrangement being arranged to selectively switch between a plurality of different operational settings (11, 12, 13, 14, 15), said arrangement comprises a display unit (10) on which each of said operational settings (11, 12, 13, 14, 15) can be visually displayed, whereby each operational setting (11, 12, 13, 14, 15) is selected, and associated with an identification signal (50) representative of a predetermined displayed size, part or view of said vehicle on said display unit (10),
**characterized in that** said arrangement comprises a signal gateway (20) through which at least one signal from at least one instrument (30) is/are selectively provided access to said display unit (10) depending on the selected operational setting(s) (11, 12, 13, 14, 15), and **in that**
said arrangement is further arranged to;
selectively receive said at least one signal from said at least one instrument (30),
said at least one instrument (30) being
at least one information receiving instrument and/or
at least one vehicle information collecting instrument and;
substantially simultaneously providing access for said identification signal (50) and said at least one signal through said signal gateway (20) to said display unit (10), and **in that** each operational setting (11-15) is automatically selected.

2. The arrangement according to claim 1, **characterized in that** said identification signal (50) is representative of an unique displayed size, part or view of said vehicle on said display unit (10).

3. The arrangement according to claim 1, **characterized in that** said operational setting (11, 12, 13 14, 15) is automatically selected at least on the basis of the vehicle speed.

4. The arrangement according to any preceding claims, **characterized in that** said at least one instrument (30) comprises a plurality of instruments (31-34) which are permitted access through said signal gateway on the basis of their operational distance.

5. The arrangement according to any preceding claims, **characterized in that** at least first, second, third and fourth operational settings are selectable and **in that** a predetermined combination of instruments is permitted access for each selected operational setting (11, 12, 13, 14, 15).

6. The arrangement according to any preceding claims, **characterized in that** said pluralities of operational settings includes a first operational setting (11) during which said signal gateway (20) permits access to a first block (31) of instruments, said first block of instruments comprises at least one information receiving instrument.

7. The arrangement according to any preceding claims, **characterized in that** said plurality of operational settings include;
an operational setting (12) during which said signal gateway (20) permits access to at least a block of instruments, said block of instruments comprises at least one information receiving instrument and at least one vehicle information collecting instrument.

8. The arrangement according to any preceding claims, **characterized in that** said plurality of operational settings include;
an operational setting (13) during which said signal gateway (20) permits access to at least one vehicle information collecting instrument.

9. The arrangement according to any preceding claims, **characterized in that** said plurality of operational settings include;
an operational setting (14) during which said signal gateway (20) permits access to at least one vehicle status instrument.

10. The arrangement according to any preceding claims, **characterized in that** said plurality of operational settings include;
an operational setting (15) during which said signal gateway (20) permits access to at least one vehicle information log instrument.

## Patentansprüche

1. Elektronische Anordnung für ein Fahrzeug zum Steuern von Signalen in einer elektronischen Anzeigeanordnung, wobei die elektronische Anordnung dazu ausgelegt ist, wahlweise zwischen mehreren verschiedenen Betriebseinstellungen (11, 12, 13, 14, 15) zu schalten, wobei die Anordnung eine Anzeigeeinheit (10) umfasst, auf der jede der Betriebseinstellungen (11, 12, 13, 14, 15) visuell angezeigt werden kann,
wobei jede Betriebseinstellung (11, 12, 13, 14, 15) gewählt und einem Identifizierungssignal (50), das eine vorgegebene Anzeigegröße, ein Teil oder eine Ansicht des Fahrzeugs auf der Anzeigeeinheit (10) repräsentiert, zugeordnet wird,
**dadurch gekennzeichnet, dass**
die Anordnung ein Signal-Gateway (20) umfasst, durch das für wenigstens ein Signal von wenigstens einem Instrument (30) wahlweise in Abhängigkeit von der oder den gewählten Betriebseinstellungen (11, 12, 13, 14, 15) ein Zugang zu der Anzeigeeinheit (10) bereitgestellt wird, und dass
die Anordnung ferner dazu ausgelegt ist,
wahlweise das wenigstens eine Signal von dem wenigstens einen Instrument (30) zu empfangen,
wobei das wenigstens eine Instrument (30)
wenigstens ein Informationsempfangsinstrument und/oder
wenigstens ein Fahrzeuginformationssammelinstrument ist; und
im Wesentlichen gleichzeitig für das Identifizierungssignal (50) und für das wenigstens eine Signal durch das Signal-Gateway (20) einen Zugang zu der Anzeigeeinheit (10) bereitzustellen und
dass jede Betriebseinstellung (11-15) automatisch gewählt wird.

2. Anordnung nach Anspruch 1, **dadurch gekennzeichnet, dass** das Identifizierungssignal (50) eine eindeutige Anzeigegröße, ein eindeutiges Teil oder eine eindeutige Ansicht des Fahrzeugs auf der Anzeigeeinheit (10) repräsentiert.

3. Anordnung nach Anspruch 1, **dadurch gekennzeichnet, dass** die Betriebseinstellung (11, 12, 13, 14, 15) automatisch wenigstens anhand der Fahrzeuggeschwindigkeit gewählt wird.

4. Anordnung nach einem der vorhergehenden Ansprüche, **dadurch gekennzeichnet, dass** das wenigstens eine Instrument (30) mehrere Instrumente (31-34) umfasst, für die durch das Signal-Gateway ein Zugang anhand ihrer Betriebsstrecke bereitgestellt wird.

5. Anordnung nach einem der vorhergehenden Ansprüche, **dadurch gekennzeichnet, dass** wenigstens eine erste, eine zweite, eine dritte und eine vierte Betriebseinstellung gewählt werden können und dass für jede gewählte Betriebseinstellung (11, 12, 13, 14, 15) ein Zugang zu einer vorgegebenen Kombination von Instrumenten gewährt wird.

6. Anordnung nach einem der vorhergehenden Ansprüche, **dadurch gekennzeichnet, dass** die mehreren Betriebseinstellungen eine erste Betriebseinstellung (11), bei der das Signal-Gateway (20) einen Zugang zu einem ersten Block (31) von Instrumenten gewährt, umfasst, wobei der erste Block von Instrumenten wenigstens ein Informationsempfangsinstrument umfasst.

7. Anordnung nach einem der vorhergehenden Ansprüche, **dadurch gekennzeichnet, dass** die mehreren Betriebseinstellungen umfassen:
eine Betriebseinstellung (12), bei der das Signal-Gateway (20) einen Zugang zu wenigstens einem Block von Instrumenten gewährt, wobei der Block von Instrumenten wenigstens ein Informationsempfangsinstrument und wenigstens ein Fahrzeuginformationssammelinstrument umfasst.

8. Anordnung nach einem der vorhergehenden Ansprüche, **dadurch gekennzeichnet, dass** die mehreren Betriebseinstellungen umfassen:
eine Betriebseinstellung (13), bei der das Signal-Gateway (20) einen Zugang zu wenigstens einem Fahrzeuginformationssammelinstrument gewährt.

9. Anordnung nach einem der vorhergehenden Ansprüche, **dadurch gekennzeichnet, dass** die mehreren Betriebseinstellungen umfassen:
eine Betriebseirzstellung (14), bei der das Signal-Gateway (20) einen Zugang zu wenigstens einem Fahrzeugstatusinstrument gewährt.

10. Anordnung nach einem der vorhergehenden Ansprüche, **dadurch gekennzeichnet, dass** die mehreren Betriebseinstellungen umfassen:
eine Betriebseinstellung (15), bei der das Signal-Gateway (20) einen Zugang zu wenigstens einem Fahrzeuginformationsaufzeichnungsinstrument gewährt.

## Revendications

1. Ensemble électronique pour un véhicule, destiné au contrôle de signaux dans un ensemble de visualisation électronique, ledit ensemble électronique étant agencé pour passer d'un réglage à l'autre d'une pluralité de réglages de fonctionnement différents (11, 12, 13, 14, 15), ledit ensemble comprenant une unité de visualisation (10) sur laquelle chacun desdits réglages de fonctionnement (11, 12, 13, 14, 15) peut être affiché visuellement, chaque réglage de fonctionnement (11, 12, 13, 14, 15) étant sélectionné et associé à un signal d'identification (50) représentatif d'une taille, partie ou vue affichée prédéterminée dudit véhicule sur ladite unité de visualisation (10),
***caractérisé en ce que*** ledit ensemble comprend une passerelle (20) de signaux par laquelle l'accès à ladite unité de visualisation (10) est fourni sélectivement à au moins un signal provenant d'au moins un instrument (30), en fonction du(des) réglage(s) de fonctionnement choisi(s) (11, 12, 13, 14, 15),
et ***en ce que*** ledit ensemble est agencé en outre pour :
recevoir sélectivement ledit au moins un signal dudit au moins un instrument (30), ledit au moins un instrument (30) étant
au moins un instrument de réception d'informations et/ou
au moins un instrument de collecte d'informations concernant le véhicule, et ;
fournir essentiellement simultanément un accès à ladite unité de visualisation (10), via ladite passerelle (20) de signaux, audit signal d'identification (50) et audit au moins un signal,
et ***en ce que*** chaque réglage de fonctionnement (11-15) est sélectionné de manière automatique.

2. Ensemble selon la revendication 1, ***caractérisé en ce que*** ledit signal d'identification (50) est représentatif d'une unique taille, partie ou vue affichée dudit véhicule sur ladite unité de visualisation (10).

3. Ensemble selon la revendication 1, ***caractérisé en ce que*** ledit réglage de fonctionnement (11, 12, 13, 14, 15) est choisi de manière automatique au moins sur la base de la vitesse du véhicule.

4. Ensemble selon l'une quelconque des revendications précédentes, ***caractérisé en ce que*** ledit au moins un instrument (30) comprend une pluralité d'instruments (31-34) auquel l'accès par ladite passerelle de signaux est autorisé sur la base de leur distance de fonctionnement.

5. Ensemble selon l'une quelconque des revendications précédentes, ***caractérisé en ce que*** lesdits au moins premier, deuxième, troisième et quatrième réglages de fonctionnement sont sélectionnables et ***en ce qu'***un accès est autorisé à une combinaison prédéterminée d'instruments pour chaque réglage de fonctionnement sélectionné (11, 12, 13, 14, 15).

6. Ensemble selon l'une quelconque des revendications précédentes, ***caractérisé en ce que*** ladite pluralité de réglages de fonctionnement comprend un premier réglage de fonctionnement (11) pendant lequel ladite passerelle (20) de signaux autorise l'accès à une première série (31) d'instruments, ladite première série d'instruments comprenant au moins un instrument de réception d'informations.

7. Ensemble selon l'une quelconque des revendications précédentes, ***caractérisé en ce que*** ladite pluralité de réglages de fonctionnement comprend un réglage de fonctionnement (12) pendant lequel ladite passerelle (20) de signaux autorise l'accès à au moins une série d'instruments, ladite série d'instruments comprenant au moins un instrument de réception d'informations et au moins un instrument de collecte d'informations concernant le véhicule.

8. Ensemble selon l'une quelconque des revendications précédentes, ***caractérisé en ce que*** ladite pluralité de réglages de fonctionnement comprend un réglage de fonctionnement (13) pendant lequel ladite passerelle (20) de signaux autorise l'accès à au moins un instrument de collection d'informations concernant le véhicule.

9. Ensemble selon l'une quelconque des revendications précédentes, ***caractérisé en ce que*** ladite pluralité de réglages de fonctionnement comprend un réglage de fonctionnement (14) pendant lequel ladite passerelle (20) de signaux autorise l'accès à au moins un instrument donnant le statut du véhicule.

10. Ensemble selon l'une quelconque des revendications précédentes, ***caractérisé en ce que*** ladite pluralité de réglages de fonctionnement comprend un réglage de fonctionnement (15) pendant lequel ladite passerelle (20) de signaux autorise l'accès à au moins un instrument fournissant un journal d'informations concernant le véhicule.
